# EUROPEAN PATENT SPECIFICATION

(11) **EP 4 299 201 B1**
(45) Date of publication and mention of the grant of the patent: **03.09.2025**
(21) Application number: 22182558.1
(22) Date of filing: 01.07.2022
(51) Int. Cl.: B07C 5/36, B07C 3/08, B65G 47/51, B65G 54/02, B65G 47/96

(54) **A SORTING SYSTEM AND METHOD**
SORTIERSYSTEM UND -VERFAHREN
SYSTÈME ET PROCÉDÉ DE TRI

(43) Date of publication of application: 03.01.2024
(73) Proprietor: BEUMER Group A/S, 8200 Aarhus N (DK)
(72) Inventor: Staun, Jørgen, 8382 Hinnerup (DK); Skyum, Henrik Frank, 8370 Hadsten (DK)
(74) Representative: Plougmann Vingtoft a/s

(56) References cited:
- US-A1- 2004 073 333

## Description

### FIELD OF THE INVENTION

The present invention relates to a sorting system and a method to sort items using a transfer buffer to transfer items from an in-feed station to a main sorter.

### BACKGROUND OF THE INVENTION

In a sorting system to sort items, like articles, parcels, packages, baggage and other items, the items are transferred from in-feed lines of a feeder to carriers on a sorter.

The items may be transported on a conventional induction, comprising a linear conveyer belt, connecting the in-feed lines to a cross belt sorter.

From an in-feed line an item is transferred to a carrier on the conveyor, the carrier then moves along the conveyor to the sorter, and then transfers the item from the carrier to another carrier on the sorter.

In a sorting system, which is handling many items, several in-feed lines and conveyors may be needed; to obtain the capacity needed to transfer all incoming items to the sorter.

Requiring several feeders and several conveyors are expensive, and it is requiring a lot of space.

US2004/0073333 A1 discloses an object sorting system including a first sorting matrix, a second sorting matrix crossing said first sorting matrix, and a control system for directing the sorting of objects to one of a plurality of sort destinations. The first sorting matrix may include discharge apertures for discharging objects to the second matrix. Also, the first sorting matrix receives objects form induction assemblies.

Hence, an improved sorting system would be advantageous, and in particular, a more efficient and/or reliable sorting system would be advantageous.

### OBJECT OF THE INVENTION

It is an object of the present invention to increase the capacity of a sorting system.

It is a further object of the present invention to reduce the space required for transferring items to the main sorter in the sorting system.

It is a further object of the present invention to provide an alternative to the prior art.

In particular, it may be seen as an object of the present invention to provide a sorting system that solves the above mentioned problems of the prior art with high capacity in transferring items from a feeder to a main sorter using an intermediate track.

### SUMMARY OF THE INVENTION

Thus, the above described object and several other objects are intended to be obtained in a first aspect of the invention by providing a sorting system to sort items, the sorting system comprises an in-feed station, a transfer buffer, and a main sorter, wherein
- the in-feed station is arranged to receive items and to transfer the items from the in-feed station to the transfer buffer,
- the transfer buffer comprises an intermediate track and one, or more, of independent buffer carriers, the independent buffer carriers being displaceable around the intermediate track, the intermediate track forming a closed loop,
- the main sorter is arranged to receive items from the transfer buffer,
- each independent buffer carrier on the intermediate track is arranged to
   ∘ move into a position to receive items from the in-feed station,
   ∘ receive items from the in-feed station,
   ∘ move into a position to deliver the items to the main sorter, and
   ∘ hand over the items to the main sorter,
   wherein each of the one, or more, independent buffer carriers are arranged independently to control velocity and position.

Items are entering the sorting system in the in-feed station, from the in-feed station the items are transferred to the transfer buffer, and from the transfer buffer the items are handed over to the main sorter. The main sorter may be a cross belt sorter, line sorter, a tilt tray sorter and a pouch sorter or any kind of sorter for sorting articles, items, baggage, parcels, packages, piece goods and other items suitable for sorting in a sorting system. The main sorter may comprise a loop, where the loop receives items from the transfer buffer.

The transfer buffer comprises an intermediate track, placed between the in-feed station and the main sorter. The intermediate track preferably may be a closed loop. The intermediate track may be rail-bound, with the buffer carriers moving on a rail, alternatively the intermediate track may be a virtual track, where there is no rail, with the buffer carriers being mobile robots, e.g. automatic guide vehicles (AGV) moving on the virtual track.

The intermediate track preferably may be a substantial horizontal track. The intermediate track may be formed with slopes either lowered or elevated as appropriate for the application.

Alternatively, the intermediate track may be a vertical track, where for instance, the in-feed station may be placed below the main sorter and the transfer buffer is then lifting items up from the in-feed station to the main sorter.

The buffer carriers are moving independently around on the intermediate track, each buffer carrier comprises means to control the velocity of the buffer carrier. Each buffer carrier therefore independently may change the velocity and move around the intermediate track transporting items from the in-feed station to the main sorter. The buffer carriers are only limited in their movement, position and velocity, by avoiding collisions with the buffer carriers in front of them and behind them on the intermediate track.

A part of the intermediate track may be parallel to the main sorter in the hand-over area, where items are handed over from buffer carriers on the intermediate track to sorter carriers on the sorter track. When transferring the item from the buffer carrier to the sorter carrier, the buffer carrier on the intermediate track may accelerate to substantially match the velocity of the sorter carrier, before handing over the item to the main sorter.

The buffer carrier is accelerated in the acceleration area, which is the area between the transfer area, where items are transferred to the buffer carriers from holding carriers, and the hand-over area. In the acceleration area, buffer carriers are accelerated to move away from the transfer area and to be positioned in the hand-over area to hand over items to sorter carriers.

In an embodiment, the buffer carriers are first accelerated in the acceleration area to a travel speed, but may be deaccelerated to match the speed of the sorter carrier, to which the item is to be handed-over, in case the sorter carrier is moving slower than the speed of the buffer carrier. In case the load of the sorter system is low, for instance in periods where few items are received by the sorter system, the carriers on the main sorter may move slowly to match the current load and save power. In addition, if there is no empty sorter carriers, the buffer carriers may be deaccelerated to stand still in the accelerating area while waiting for an empty sorter carrier.

Items may arrive to the in-feed station on feed lines, which for instance may be inductions, like conveyor belts. Alternatively, the feed-lines may be human operators or robots moving items to the in-feed station. There may be several feed-lines feeding the in-feed station with items. The feed-lines may be equipped with a scale allowing detecting the size of the items analysing images taken by cameras at the feeding lines. In addition, the feed-lines may be equipped with barcode readers to identify the items.

From the in-feed station, the items are transferred to the independent buffer carriers on the intermediate track, the buffer carriers on the intermediate track then moves to the main sorter, where items are handed over from buffer carriers on the intermediate track to sorter carriers on the main sorter.

Also in the transfer area, the velocity of the buffer carriers may be changed, accelerated or deaccelerated to match the speed of the holding carriers of the in-feed station. In a preferred embodiment, the buffer carriers are standing still when receiving items from the in-feed station.

According to an embodiment, two, or more, independent buffer carriers are arranged to be positioned simultaneously to receive items from the in-feed station.

The in-feed station may be able to transfer two, or more, items simultaneous to two, or more, buffer carriers. Therefore, two, or more, buffer carriers may be positioned simultaneous to receive items from the in-feed station. The advantage of being able to transfer two, or more, items simultaneous, is that the velocity transferring items from the in-feed station to the transfer buffer increases and therefore the capacity of the sorting system is increasing.

There are three different kind of carriers mentioned in this description, buffer carriers, sorter carriers and holding carriers. The buffer carriers transport items on the transfer buffer, the sorter carriers transport items on the main sorter and holding carriers are holding or transporting items on the in-feed station. The carriers may comprise a surface holding an item. The surface may be a conveyer belt or a flat surface in a tilt tray. The carriers may comprise a tote or a pallet for holding the item. The carriers may comprise a pouch for holding the item. The carriers may also be understood as an arm or such pushing the item in front of them on a track. A carrier may be anything, which may move an item on a track.

The carriers may comprise means, like a conveyor belt or a tilting mechanism, to move the item from the carrier to an adjacent carrier. However, the items may also be moved by other means, for instance by a robot, a mobile unit or another external mechanism being able to move, for instance by lifting or pushing, an item from one carrier to an adjacent carrier.

Two, or more, buffer carriers may be connected to each other. Thereby, two succeeding buffer carriers may work together as one, and thereby they may be able to handle larger items, too large for one buffer carrier, but by the item resting on two buffer carriers, the item can be transported to the main sorter. The two, or more, buffer carriers connected to each other are then working together in a synchronized may to handle larger items.

A feed line, comprising a wide conveyor, could feed a wide item transferred to more than one holding carrier and further transferred to more than one buffer carrier, e.g. to two, three, or more, buffer carriers. Thus, the item is move around the intermediate track on two, or more, buffer carriers and handed over to two, or more, sorter carriers as a multiple-carrier item.

During transport of the multiple-carrier item in the curves of the intermediate track, the item may move on the two, or more, buffer carriers. Detection means such as sensors or vision cameras may be applied to detect the movement of the item on the buffer carriers and used as input for controlling the alignment of the item by activating one, or more, of the buffer carriers before arriving at the hand-over area, where the item is handed over to the sorter carriers.

The sorting system may comprise one, or more, transfer buffers. E.g., the sorting system may comprise two or three transfer buffers handing over items to the same main sorter. Likewise, the system may comprise one, or more, in-feed stations.

The transfer buffers are relatively compact compared to existing solutions, by making it possible to transfer two, or more, items simultaneous from the in-feed station to the transfer buffer, the efficiency and speed of transferring items from the in-feed station to the main sorter is increased. Therefore, the space required for means to transfer items from feeder lines to the main sorter is reduced, saving space in the building.

According to an embodiment, each independent buffer carrier on the intermediate track is further arranged to
∘ accelerate to substantially match the velocity of an empty sorter carrier on the main sorter,
∘ to move with substantially the same velocity next to the empty sorter carrier, and
∘ to transfer items to the empty sorter carrier during said movement.

When a buffer carrier has received an item from the in-feed station, the buffer carrier moves to a position to hand over the item to a sorter carrier on the main sorter. To do this the buffer carrier must move substantially next to an empty sorter carrier, which is to receive the item. Therefore, the buffer carrier is accelerated substantially to match the velocity and position of the empty sorter carrier, and to be moving next to the empty sorter carrier. When moving next to the adjacent empty sorter carrier, the item is handed over from the buffer carrier to the empty sorter carrier. There may be a difference in speed between the sorter carrier and the buffer carrier, but while one is overtaking the other, for a while, they will be moving next to each other, and during this period, an item may be handed over from the buffer carrier to the sorter carrier.

According to the invention, each of the one, or more, independent buffer carriers are arranged independently to control velocity and position.

The buffer carriers on the transfer buffer are each arranged to control the velocity and the position independently. When a buffer carrier has received an item from the in-feed station, the buffer carrier has to deliver the parcel to an empty sorter carrier on the main sorter. To do that the buffer carrier may be accelerating from zero velocity, when receiving the parcel, to a substantially similar velocity as the sorter carrier, positioned to move next to the sorter carrier. The buffer carrier therefore are accelerated to be positioned substantially side-by-side with a sorter carrier.

According to an embodiment, each of the one, or more, independent buffer carriers are arranged to be standing still, when items are received from the in-feed station.

Preferably, in some embodiments, the independent buffer carriers are standing still, when they, in the transfer area, are positioned to receive items from the in-feed station. The advantage of the independent carrier standing still is that the items will be transferred strait to the independent carrier, without being partly rotated, when entering the independent carrier, which could easily happen, and is a well-known problem, if the independent carrier was moving. If the item were rotated, it would take up more space in the direction of movement and would therefore require more space, and would therefore reduce the size of items, which may be handled by the sorting system.

According to an embodiment, the intermediate track comprises:
a. a waiting area, wherein the independent buffer carriers waits until they can move into position to receive items from the in-feed station,
b. a transfer area, wherein the independent buffer carriers receive items from the in-feed station,
c. an accelerating area, wherein the velocity of the independent buffer carriers is adjusted to the velocity of the sorter carriers, and
d. a hand-over area, wherein the independent buffer carriers hands over the items to the sorter carriers.

The intermediate track comprises a transfer area, an accelerating area, a hand-over area and a waiting area. In the transfer area, items are transferred from the in-feed station to independent buffer carriers on the intermediate track. In the accelerating area, the buffer carriers may be accelerated substantially to match the velocity of the carriers on the main sorter; it is possible a buffer carrier first is accelerated to fast move away from the transfer area, and then later is deaccelerated to match the velocity of the sorter carriers. It is also possible the buffer carrier stops in the accelerating area, in case no empty sorter carrier is available, so the buffer carrier may have to wait for the arrival of an empty sorter carrier. In the hand-over area, each buffer carrier is moving substantially side-by-side with an empty sorter carrier, substantially moving with similar velocity as the sorter carrier, and items are handed over from the buffer carrier to the sorter carrier. In the waiting area, the buffer carriers are waiting for the in-feed station to be ready to transfer new items to the buffer carriers.

The transfer buffer may also be able to store items in a temporary storage. The storage may comprise a storage conveyer receiving items from the transfer buffer to hold the items or store the items in a storage area. Later the item is returned to the transfer buffer. The storage conveyer may be a conventional conveyer connected to the transfer buffer between the in-feed station and the main sorter, for instance in the accelerating area or the waiting area. Alternatively, the storage conveyor may be another transfer buffer. The storage conveyor may be receiving items in the accelerating area or in the waiting area, when there is no free sorter carriers, or when an item may not be needed for a while, for instance when the item is for a plain or a transport later in the day.

In addition, items may be handed over from the sorter carriers to the buffer carriers to enter a storage, for instance when the item is not needed for a while. If the main sorter is having an item to be stored, the main sorter may hand over items to the transfer buffer, which then again is transferring the item to a storage conveyer for temporary storage. The storage conveyer may hand the item over to a storage.

According to an embodiment, the main sorter comprises a sorter track and one, or more, sorter carriers, the sorter carriers being displaceable on the sorter track, the sorter carriers on the main sorter moves with substantially similar velocity.

One, or more, sorter carriers moves on the sorter track. Each sorter carrier moves along the sorter track and some of the sorter carriers may be empty, while others are carrying an item. The items from the buffer carriers are to be handed over from the buffer carrier to an empty sorter carrier.

In the preferred embodiment the sorter carriers on the main sorter moves with the same velocity in the hand-over area. This may be the case if the main sorter is a line sorter, where all sorter carriers on the main sorter are connected with a chain, and therefore always are synchronised with each other. However, using other kind of sorters, like a pouch sorter or an AGV sorter, the sorter carriers may be able to move with different velocity, but still it will be preferable that in the hand-over area the sorter carriers moves with substantially the same velocity. With the sorter carriers moving with the same velocity, the sorter carriers can be close together. If the sorter carriers were moving with different velocity, or accelerating or deaccelerating, gaps may occur in between the sorter carriers, and fewer sorter carriers would pass by the transfer buffer within a period, than when they all move with the same velocity. Therefore, with all the sorter carriers moving with the substantially same velocity, a higher capacity for the sorting system is ensured, allowing more items to be transferred from the transfer buffer to the main sorter within a period.

According to an embodiment, the in-feed station is arranged to simultaneous transfer two, or more, items from the in-feed station to said two, or more, independent buffer carriers.

The in-feed station is arranged to be able to simultaneous transfer two, or more, items from the in-feed station to different buffer carriers. To do this the in-feed station comprises means to transfer two, or more, items simultaneous from the in-feed station.

In a preferred embodiment, the in-feed station is arranged to move more than two items simultaneous. Typically, the in-feed station may be arranged to transfer e.g. 6 items simultaneous, but the in-feed station may also be arranged to transfer 3, 4, 5, 7, 8, or more, items simultaneous. The number of items to be transferred simultaneous may depend on how many is preferable to reach the optimal capacity.

According to an embodiment, the in-feed station comprises one or more feed lines.

The in-feed station may comprise one, or more, feed-lines. Having more than one feed-line allows the in-feed station to transfer more items simultaneous from different feed-lines to different buffer carriers, increasing the capacity of the transfer buffer allowing more items to be handled by the transfer buffer.

Transfer times from the in-feed station to the transfer buffer may be optimized based on size of the items transferred, by measuring the length of the items to be transferred, and by determine transfer times, to regulate the timing of the buffer carriers. Hereby reducing or increasing the time the buffer carriers need to be in position to receive an item from a holding carrier according to how long it takes to move an item from a holding carrier to a buffer carrier. Sensors may measure the size of the items before they are transferred to the buffer carrier, and transfer times may be calculated and the buffer carriers controlled accordingly to minimize the time used to transfer items from the in-feed station to the buffer carriers.

According to an embodiment, the in-feed station comprises a shifting device; the shifting device is placed between the feed lines and the transfer buffer, and the shifting device is intermediately holding items.

A shifting device is a device allowing the in-feed station to hold items temporarily, while receiving more items from a feed line. Using the shifting device has the advantage that items may be stored in the shifting device until the number of items to be transferred simultaneous to the transfer buffer has been received and placed in the shifting device, without having to hold buffer carriers waiting in the transfer area.

According to an embodiment, the one, or more, feed lines are arranged to deliver items to the shifting device.

The shifting device may receive items from one, or more, feed lines. The shifting device may hold the items until the items may be transferred to buffer carriers.

According to an embodiment, the shifting device comprises two, or more, holding carriers.

The shifting device comprises several holding carriers. Each holding carrier comprises arrangement for receiving an item from a feed line. Empty holding carriers are moved in position to receive items from the feed lines. A holding carrier holds an item until the item may be transferred to a buffer carrier. The number of holding carriers corresponds to the number of items to be transferred simultaneous to the transfer buffer.

According to an embodiment, the shifting device is arranged to move empty holding carriers into a position to receive items from the feed lines.

The shifting device can move holding carriers to make it possible to receive items to different holding carriers from the same feed line. Typically, two holding carriers are receiving items from the same feed line. First one holding carrier receives an item, and then moves to make room for the other holding carrier, which then receives an item. However, the shifting device may be arranged for more holding carriers, e.g. 3 or 4, to receive items from the same feed line. E.g. if a feed line is out of order and not working, the holding carriers normally receiving items from the out of order feed line may receive items from another feed line.

According to an embodiment, the shifting device is arranged to transfer items to two, or more, independent buffer carriers simultaneous.

The holding carriers, which is carrying an item, are moved into positions making it possible for the holding carriers simultaneous to transfer items from different holding carriers to different buffer carriers. The holding carriers on the shifting device may be arranged to be moving when transferring items to the buffer carriers.

According to an embodiment, a first independent buffer carrier is arranged to move into a position to receive an item from the in-feed station, and a second independent buffer carrier is arranged to move to a position adjacent to the first independent buffer carrier. The second independent buffer carrier is arranged to move to a position to receive an item from the in-feed station as soon as the first independent buffer carrier has moved away.

In an alternative embodiment, where there is no shifting device, the items may be transferred directly from the feed-lines in the in-feed station to buffer carriers on the transfer buffer.

To speed up the delivery of items from the in-feed station to the buffer carriers, when there is no shifting device, two independent buffer carriers are moved into positions, where the first independent buffer carrier is receiving an item from the in-feed station, and the second independent buffer carrier is placed next to the first independent buffer carrier. When the first independent buffer carrier has received an item and is moving away, the second independent buffer carrier immediately may move in position to receive an item from the in-feed station.

According to an embodiment, the in-feed station comprises an in-feed sorter; the in-feed sorter is arranged to receive items and transfer the items to the transfer buffer.

The in-feed sorter is a sorter just like the main sorter and may be a cross belt sorter, line sorter, a tilt tray sorter, a pouch sorter or any kind of sorter for sorting items. The in-feed sorter may receive items from feed-lines or from other sorters. The in-feed sorter is transferring items to the transfer buffer. Items may be transferred from holding carriers on the in-feed sorter to buffer carriers on the transfer buffer.

In the transfer area, each independent buffer carrier is arranged to match the velocity of a holding carrier on the in-feed sorter, to move with substantially the same velocity next to the holding carrier, and to receive items from the holding carrier during said movement.

The transfer buffer may be used as an intermediate track between two sorters, or the transfer buffer may be used as an intermediate track between different sections of the same sorter. For very large sorters, as i.e. known from airports, it may be beneficial to have short cuts between different sections of the sorter to be able to direct the items by a shorter and faster route to the items destination.

The transfer buffer is flexible and may be used in many different sorter systems, as an intermediate buffer between sorters or as intermediate buffer between different feeder systems and a sorter.

According to an embodiment, the sorting system comprises a control system, and the control system is arranged to communicate with the independent buffer carriers.

The control system is monitoring and controlling the sorting system. The control system is keeping track of items, monitoring the position of the items, and the control system controls the main sorter, the transfer buffer and the in-feed station. Thereby the control system is controlling the position of the different carriers and the transfer of items from one carrier to another carrier.

Each independent buffer carrier may be controlled individually. Therefore, each buffer carrier is communicating with the control system to receive instructions about velocity, position and other relevant parameters.

The control system may be a central computer, but it may also be a number of distributed computers working together. For instance, there may be distributed computers on each independent buffer carrier, controlling the velocity and position of the independent buffer carrier as well as receiving and discharging items from the buffer carrier. There may also be distributed computers controlling respectively the main sorter, the transfer buffer and the in-feed station.

There may be cameras, barcode readers, weight sensors, light sensors and other kind of sensors monitoring the items in many different locations in the sorting system, these sensors may all have distributed computers communication with the control system or other distributed computers.

According to an embodiment, the control system is arranged to control the velocity and the position of the independent buffer carriers.

The control system may transmit instructions about velocity and position required of the buffer carriers.

According to an embodiment, the control system is arranged to receive data from sensors to detect empty sorter carriers and to align movement of the independent buffer carriers with the empty sorter carriers.

When a buffer carrier is to hand over an item to a sorter carrier, the velocity and position of the buffer carrier is controlled to align the movement of the buffer carrier to match the position and velocity of the empty sorter carrier. Then the item may be handed over from the buffer carrier to the sorter carrier, when their movement is aligned, so they move substantially side-by-side. The items are handed over to empty sorter carriers, therefore the empty sorter carriers have to be detected, and there may be sensors detecting empty sorter carriers and inform the control system. The empty sorter carriers may be detected by sensors measuring the weight of the sorter carriers or by image analysis or by other means.

According to an embodiment, the control system is arranged to instruct the independent buffer carriers to move in a position to be able to receive an item from the in-feed station.

When an item is to be transferred from the in-feed station to a buffer carrier, the control system instructs the buffer carrier to move into the position, where it may receive the item. The buffer carrier may be positioned to stand still in a position for an item to be transferred from the infeed station. Alternatively, the buffer carrier moves past the in-feed station and an item is transferred to the buffer carrier, when it moves past the in-feed station.

According to an embodiment, the control system instructs the independent buffer carriers to wait in a waiting area on the intermediate track.

When there is no items to be transferred to the buffer carrier, or the buffer carrier waits for other buffer carriers to leave the transfer area, the buffer carrier is instructed to wait in the waiting area.

According to an embodiment, the control system is arranged to receive data from sensors to detect when the in-feed station is loaded with items to be transferred to independent buffer carriers.

To speed up the process of transferring items to the transfer buffer, it is preferable that the transfer of items to two, or more, buffer carriers is performed simultaneous. Therefore, the control system detects, when the in-feed station is loaded with items, so the required number of buffer carriers are moved into position to simultaneous receive items transferred from the in-feed station to the two, or more, buffer carriers.

Sensors may detect, when the in-feed station is loaded. This may be detected by measuring the weight of the holding carriers, light beams being broken in the holding carriers, or by image analysis of by other means.

According to an embodiment, the buffer carriers, sorter carriers and/or holding carriers comprises an transport element to receive or deliver items, preferably the transport element may be a transverse conveyor or a tilt tray.

The buffer carriers, sorter carriers and holding carriers comprises means, a transport element, to move the item placed on one carrier to another carrier or conveyor belt or any kind unloading place. The transport element may be a conveyer belt for the carrier only. Typically, the conveyor belt is a transverse conveyer, which moves substantially perpendicular to the direction of movement of the carrier. Alternatively, the transport element may be a tilting arrangement, like a tilt tray, allowing the surface of the carrier to tilt for the item carried by the carrier to slide off.

The transport element may also to suited to receive an item, for instance from another carrier, a conveyer or other. If the transport element is a conveyor belt for the carrier only, the conveyor belt may receive the item and move it to the center of the carrier.

According to an embodiment, the sorting system comprises a discharge zone, the discharge zone is arranged to receive items too large for the buffer carriers or items, which are misaligned on the buffer carriers or falls of the buffer carriers.

If an item is too large for a buffer carrier, the item is discharged to a discharge zone. From the in-feed station the item may be transferred to the buffer carrier, but if the item is too large for the buffer carrier to carry, the buffer carrier immediately discharge the item to the discharge zone. Further, by accident, items may fall of the buffer carrier, and then the discharge zone is arrange to catch the items falling of the buffer carrier. In addition, an item may be misaligned on a buffer carrier after the item was transferred to the buffer carrier, in this case the buffer carrier may discharge the item to the discharge zone. In addition, if it is discovered that an item cannot be identified, this may be discovered by the control system, the item may be discharged to the discharge zone.

Sensors may be used to detect the size, weight and/or position of the items, and based on the data the control system may decide to discharge and item to the discharge zone. It may alternatively be local distributed computer systems at the in-feed station or in the buffer carrier, which decides to discharge an item.

The discharge zone may be one, or more, chute. Items entering the discharge zone will usually be manual handled.

Chutes in the discharge zone may also be used for discharging items from the transfer buffer in a regular manner, when an item has reached its destination. The chute may be arranged to receive items from the independent buffer carriers.

In a second aspect, the invention relates to a method for sorting items in a sorting system, the sorting system is comprising an in-feed station, a transfer buffer, and a main sorter, the transfer buffer is comprising an intermediate track and one, or more, independent buffer carriers, the independent buffer carriers being displaceable around the intermediate track, the intermediate track forming a closed loop,
wherein the method is comprising:
- the in-feed station receiving items,
- the in-feed station transferring the items from the in-feed station to the transfer buffer,
- positioning one, or more, independent buffer carriers to receiving items from the in-feed station,
- the main sorter receiving items from the transfer buffer, and
- each independent buffer carrier on the intermediate track is

o moving into a position to receive items from the in-feed station,
∘ receiving items from the in-feed station,
∘ moving into a position to deliver the items to the main sorter, and handing over the items to the main sorter,
wherein each of the one, or more, independent buffer carriers are arranged independently to control velocity and position.

This aspect of the invention is particularly, but not exclusively, advantageous in that the method according to the present invention may be increasing the efficiency of transferring items from the in-feed station to the main sorter by using a transfer buffer, which may receive two, or more, items simultaneous from the in-feed station.

According to an embodiment, each independent buffer carrier on the intermediate track further is
∘ accelerating to substantially match the velocity of an empty sorter carrier on the main sorter,
∘ moving with substantially the same velocity next to the empty sorter carrier, and
∘ transferring items to the empty sorter carrier during said movement.

The method according to the third aspect may be performed by a sorting system according to the first aspect of the invention.

### BRIEF DESCRIPTION OF THE FIGURES

The sorting system according to the invention will now be described in more detail with regard to the accompanying figures. The figures show one way of implementing the present invention and is not to be construed as being limiting to other possible embodiments falling within the scope of the attached claim set.
Fig. 1 illustrates a sorting system comprising an in-feed station with a shifting device, a transfer buffer, and a main sorter.
Fig. 2 illustrates an embodiment, without a shifting device.
Fig. 3 illustrates an embodiment, where the main sorter is a pouch sorter.
Fig. 4 illustrates another embodiment, where the main sorter is a pouch sorter.
Fig. 5 illustrates an embodiment, where excess parcels may be discharged to a chute.
Fig. 6 illustrates an embodiment, where the in-feed station comprises an in-feed sorter.
Fig. 7a and 7b illustrates the carriers.
Fig. 8a, 8b and 8c illustrates the in-feed station comprising a shifting device.
Fig. 9a and 9b illustrates the in-feed station not comprising a shifting device.
Fig. 10 is a flow chart of a method of controlling the buffer carriers.
Fig. 11 is a flow chart of a method of controlling the shifting device.

### DETAILED DESCRIPTION OF AN EMBODIMENT

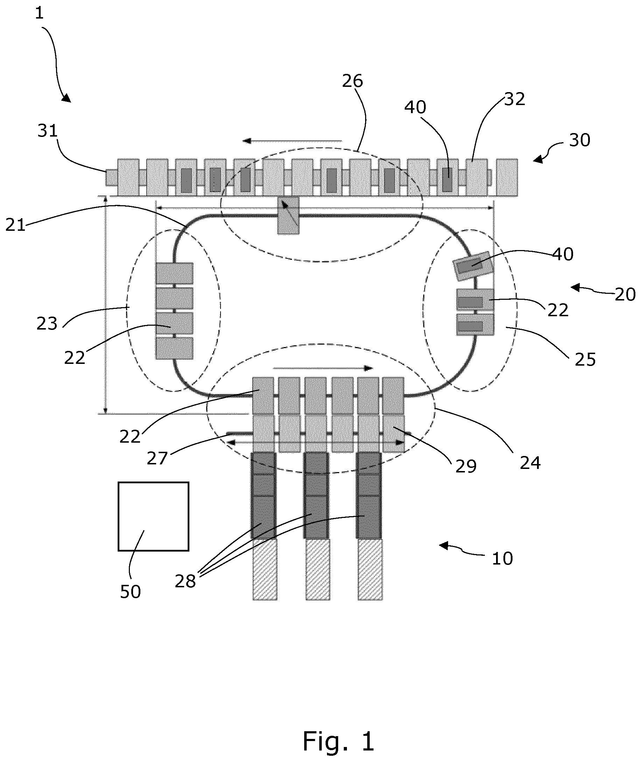

Fig. 1 shows a sorting system 1 comprising an in-feed station 10, a transfer buffer 20, and a main sorter 30. The transfer buffer 20 is moving items 40 on buffer carriers 22 from the in-feed station 10 to the main sorter 30. The transfer buffer 20 comprises an intermediate track 21, on which the buffer carriers 22 moves around. The intermediate track 21 forms a closed loop. The intermediate track may be a physical track, for instance a rail, but it may alternatively be a virtual track. The in-feed station 10 comprises feed-lines 28 and a shifting device 27 with holding carriers 29. The in-feed station is receiving items 40 on the feed-lines 28. The feed-lines may be conveyors. From the feed-lines 28, the items 40 are moved to holding carriers 29. Each feed-line in fig. 1 is delivering items to two holding carriers 29. The holding carriers are moved in the shifting device 27. The shifting device can move, or shift, the positon of the holding carriers 29, such that one holding carrier is positioned to receive items from the feed-lines 28, and when a holding carrier has received an item, the holding carriers may be moved, or shifted, and an empty holding carrier may be positioned to receive an item.

While the holding carriers 29 are receiving items 40, buffer carriers 22 are moved in position in the transfer area 24 to receive items from the in-feed station 10.

When the holding carriers 29 have received an item 40, and the buffer carriers 22 are in the position, adjacent to the holding carriers, to receive items, the items 40 from all holding carriers 29 are simultaneous transferred to the buffer carriers 22.

Preferably, the buffer carriers 22 are standing still, when items 40 are transferred to the buffer carriers. Alternatively, the buffer carriers may be moving slowly past the holding carriers 29, when items are transferred to the buffer carriers 22.

The buffer carriers 22 are controlled individually, and when a buffer carrier has received an item 40, the buffer carrier moves on through an acceleration area 25 to the hand-over area 26. The buffer carriers 22 are accelerated and the velocity of the buffer carriers adjusted substantially to match the velocity of the sorter carriers 32 and to move parallel to an adjacent and empty sorter carrier 32. The sorter carriers 32 moves preferably with a substantially constant velocity in the hand-over area 26 on the sorting track 31 of the main sorter 30. When the buffer carrier 22 is moving adjacent to an empty sorter carrier 32, it hands over the item 40 to the sorter carrier.

After handing over the item, the buffer carrier 22 moves to a waiting area 23, where it waits until it again can move to the transfer area 24 to receive an item 40 from the in-feed station 10.

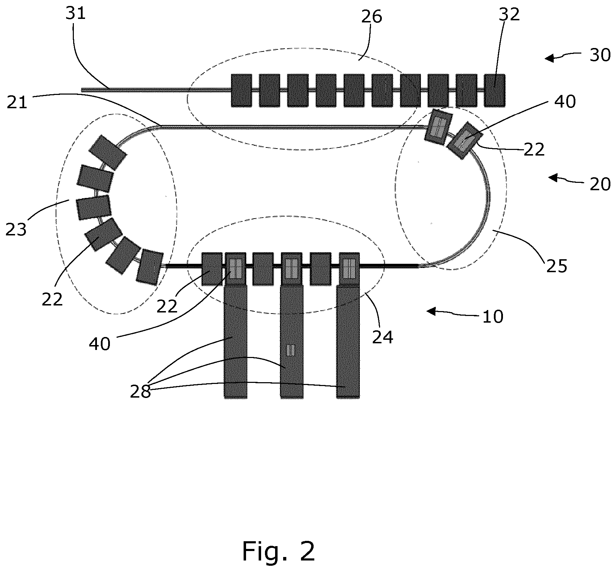

Fig. 2 shows an alternative embodiment, without a shifting device. In fig. 2, items 40, from the feed lines, are moved directly from the feed-lines 28 to the buffer carriers 22. In fig. 2, six buffer carriers 22 are moved in position in the transfer area 24 to receive items from the infeed station 10. Three of the buffer carriers are in position to receive an item, and the three buffer carriers may receive the items simultaneous. When the three buffer carriers have received an item, all six buffer carriers in the transfer area 24 is moved forward, so the three other buffer carriers are moved in position to receive items from the infeed station 10. The buffer carriers 22 in the transfer area 24 are arranged so that the first, third and fifth buffer carrier first receives items and then are moved, so the second, fourth and sixth buffer carrier may receive items. When all buffer carriers 22 have received an item 40, the buffer carriers move forward. The buffer carriers are accelerated to deliver the items to the sorter carriers 32, just like explained for Fig. 1 and therefore not repeated here.

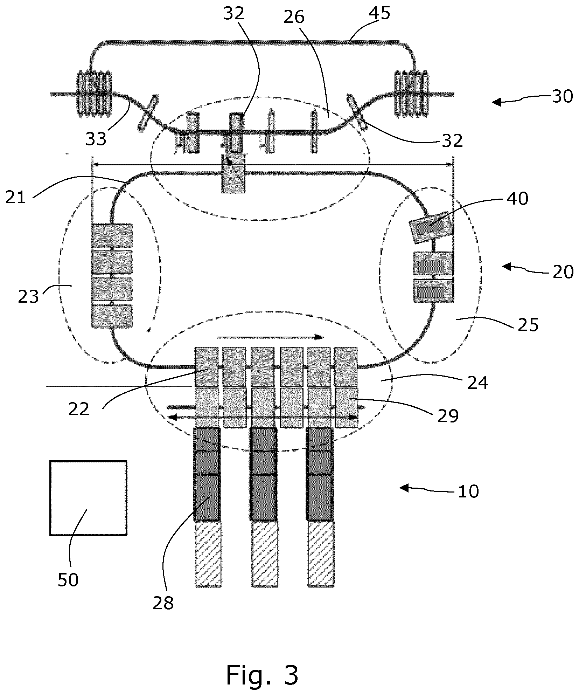

Fig. 3 illustrates an embodiment, where the main sorter 30 is a pouch sorter 33. In the pouch sorter 33, the sorter carriers 32 are pouches or bags, which are normally closed and which are opened by a metal beam to receive items 40 from the buffer carriers 22. Fig. 3 also illustrates that the main sorter 30 may comprise a loop 45, for the sorter carriers 32 to enter and possible wait in until the sorter carrier is needed for receiving an item. Except for using a pouch sorter, the embodiment of fig. 3 works similar to the embodiment in fig. 1. Therefore, it is not explained further here.

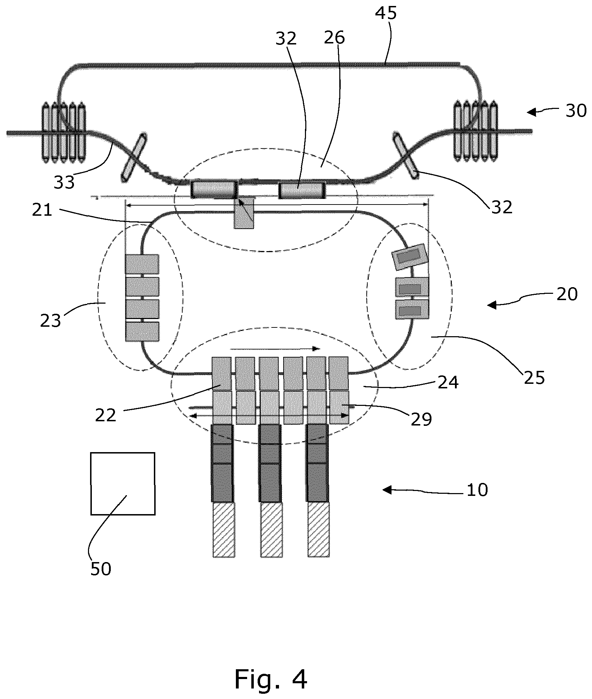

Fig. 4 illustrates another embodiment, where the main sorter 30 is a pouch sorter 33, where the sorter carriers 32 are pouches or bags. In this case, the pouches or bags are turned in the hand-over area 26, so they are laying down making the opening in to the bags wider in the direction of movement, so they are ready to receive items 40 handed over from the buffer carriers 22. Except for using a pouch sorter, the embodiment of fig. 4 works similar to the embodiment in fig. 1. Therefore, it is not explained further here.

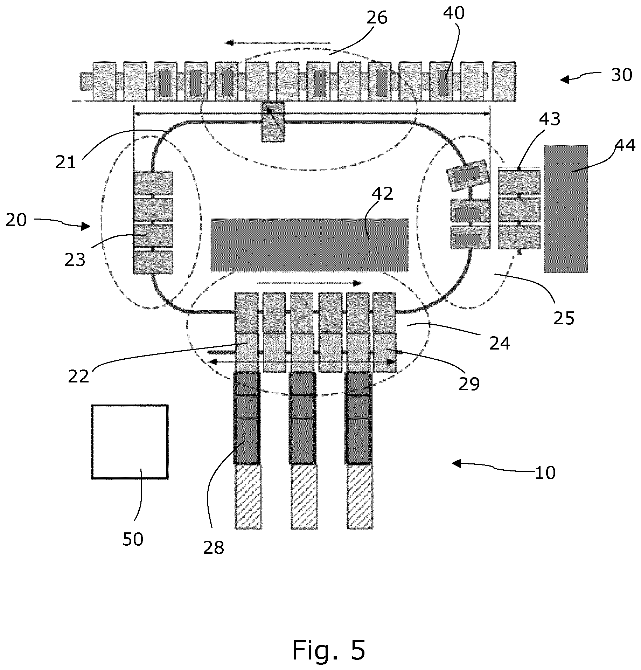

Fig. 5 illustrates an embodiment, where excess items 40 may be discharged to a discharge zone 42, which may be one, or more, chutes. This is items, which may be too large for the buffer carriers 22 to carry, or items, which by error falls of the carrier or items, which are unidentifiable or of other reasons needs manual handling. Sensors placed in the transfer area 24 may measure the size and weight of the items, or the size and weight of the items are measured before the items enters the transfer area. If the item 40 is too large or to heavy, or of other reason needs manual handling, the item may be discharged to a discharge zone 42. If the item 40 is falling of the buffer carriers by error, it may also be falling into the discharge zone. Chutes in the discharge zone 42 may also be used for general discharging items from the transfer buffer.

Items may be moved away from the transfer buffer 20 to a storage area 44 for temporary storage. Items may be moved from buffer carriers in the accelerating area 25 to a storage conveyor 43, and from the storage conveyer 43 items may be moved to a storage 44. The storage may be any kind of storage used for temporarily storing items.

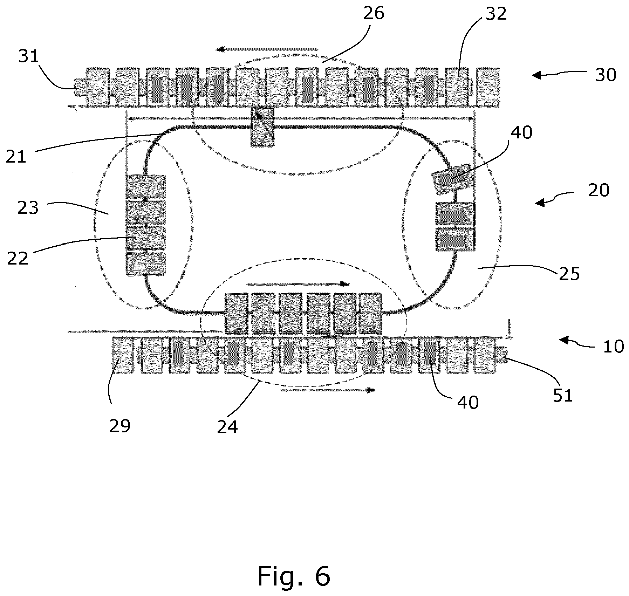

Fig. 6 illustrates an embodiment, where the in-feed station 10 comprises an in-feed sorter. In this embodiment, items from the in-feed sorter are transferred from holding carriers 29 on the in-feed sorter to buffer carriers on the transfer buffer 20.

The in-feed sorter 51 may receive items from feed-lines (not shown) or from other sorters. The in-feed sorter 51 is transferring items to the transfer buffer 20. Items may be transferred from holding carriers 29 on the in-feed sorter to buffer carriers 22 on the transfer buffer.

In the transfer area 24, each independent buffer carrier 22 is arranged to match the velocity of a holding carrier 29 on the in-feed sorter, to move with substantially the same velocity next to the holding carrier, and to receive items from the holding carrier during said movement.

Except for using an in-feed sorter 51, the embodiment of fig. 6 works similar to the embodiment in fig. 1.Therefore, it is not explained further here.

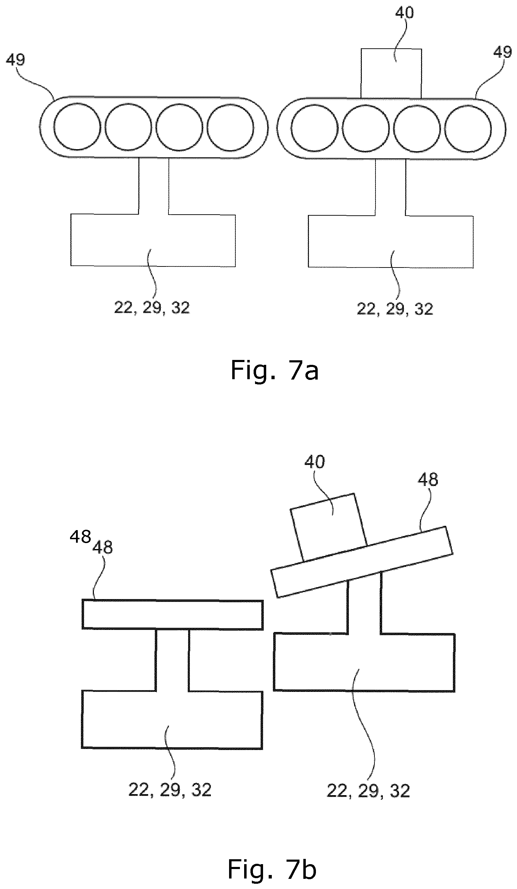

Fig. 7a and 7b illustrates the carriers 22, 29 and 32. The buffer carriers 22, the holding carriers 29 and the sorter carriers 32 may be identical or they may be different. In fig. 7a, the carriers comprises a conveyor belt 49. There are two carriers on fig. 7a, and an item 40 is moved from the carrier to the right to the carrier to the left. The right carrier may be a holding carrier 29 transferring an item to the adjacent buffer carrier 22 or the right carrier may be a buffer carrier 22 transferring an item to the adjacent sorter carrier 32. The item is moved from the right carrier to the left carrier by running the conveyor belt on both carriers, moving the item from the right carrier to the left carrier and stopping the conveyor belts when the item is placed centrally on the left carrier.

In fig. 7b the carrier have a surface 48, which may tilt, so the item, placed on the carrier surface of the carrier 22, 29, 32 to the right, slides of the carrier surface and on to the carrier surface of the carrier 22, 29, 32 to the left.

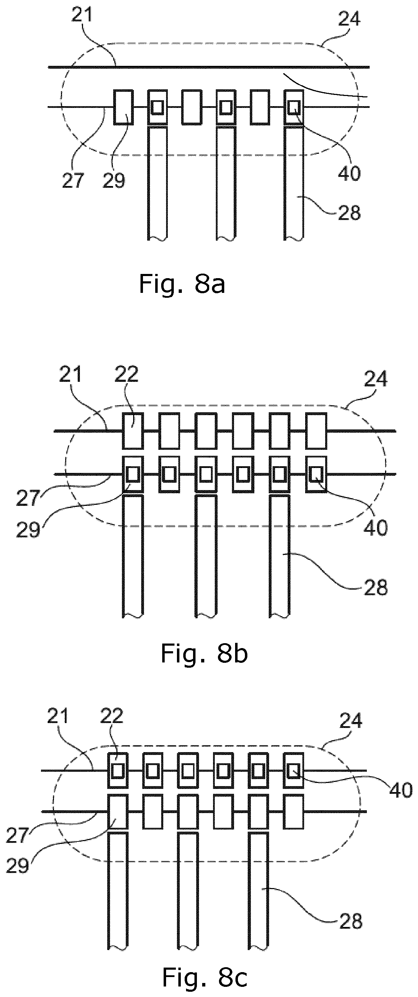

Fig. 8a, 8b and 8c illustrates the shifting device 27. In fig. 8a, six holding carriers 29 are positioned in the transfer area 24. The first, third, and fifth holding carriers 29 are positioned to receive items 40 from the feed lines 28. When all three holding carriers have received an item, the holding carriers are moved, or shifted, so the second, fourth and sixth holding carriers 29 are positioned to receive items from the feed lines. In addition, in fig. 8b six buffer carriers are positioned to receive items from the six holding carriers. In fig. 8c the items 40 has been transferred simultaneous from the holding carriers 29 to the buffer carriers 24. The buffer carriers now moves on to make room for six new buffer carriers to enter the transfer area 24.

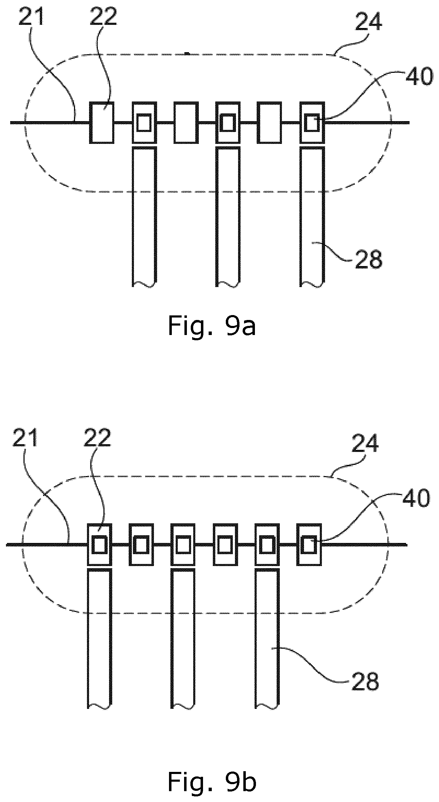

Fig. 9a and 9b illustrates the in-feed station of fig. 2 not comprising a shifting device. In fig. 9a six buffer carriers 22 are positioned in the transfer area 24, such that the first, third and fifth buffer carrier simultaneous may receive items 40 from the feed-lines 28. When as in Fig. 9a the buffer carriers 22 have received items 40, the six buffer carriers move, as illustrated in fig. 9b, so that the second, fourth and sixth buffer carrier are positioned to receive items 40 from the feed lines 28. When all buffer carriers has received items, the buffer carriers moves on to make room for the next six buffer carriers to enter the transfer area.

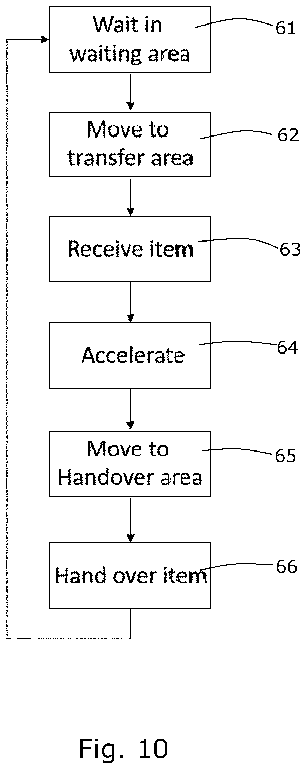

Fig. 10 illustrates the method of controlling the buffer carriers. The buffer carriers are moving around the intermediate track. The buffer carriers waits 61 in the waiting area, and when a buffer carrier is required in the transfer area, the buffer carrier moves 62 to the transfer area. In the transfer area, the buffer carrier receives 63 an item. After having received an item the buffer carrier is moving to the accelerating area, and are accelerating 64, and moves 65 to the hand-over area, where the buffer carrier substantially matches the velocity and position of an adjacent buffer carrier. Then the buffer carrier hands over 66 the item to the sorter carrier and then return to waiting 61 in the waiting area.

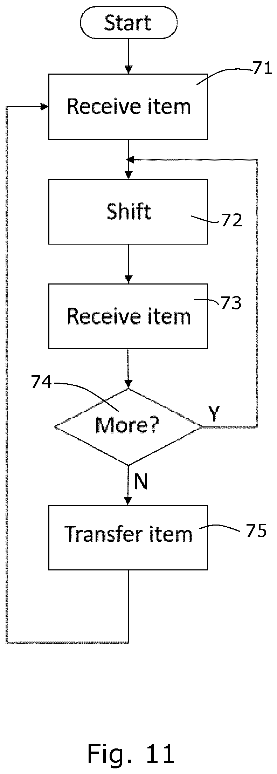

Fig. 11 illustrates the method of the shifting device. In fig. 1 and figs. 8a-8c, an embodiment is illustrated where there are two positions in which holding carriers may receive items from the feed lines, each feed line serving two holding carriers. However, there may be more positions in case each feed line is serving three, or more, holding carriers. First, all the holding carriers on the shifting device is empty and the holding carriers are moved to a position to receive items from the feed lines, where the holding carriers are receiving 71 items. Then the shifting device shifts 72, so that the next holding carriers moves to a position to receiving items. These holding carriers then receives 73 items. Then if there are more positions 74 to shift to, then the method repeats 72 and 73. If there are no more positions for the shifting device to shift to, then the items are simultaneous transferred 75 to buffer carriers.

## Claims

1. A sorting system to sort items, the sorting system (1) comprises an in-feed station (10), a transfer buffer (20), and a main sorter (30), wherein
- the in-feed station (10) is arranged to receive items (40) and to transfer the items (40) from the in-feed station to the transfer buffer (20),
- the transfer buffer (20) comprises an intermediate track (21) and one, or more, independent buffer carriers (22), the independent buffer carriers being displaceable around the intermediate track, the intermediate track forming a closed loop,
- the main sorter (30) is arranged to receive items from the transfer buffer (20),
- each independent buffer carrier (22) on the intermediate track (21) is arranged to
∘ move into a position to receive items from the in-feed station (10),
∘ receive items from the in-feed station,
∘ move into a position to deliver the items to the main sorter (30), and
∘ hand over the items to the main sorter,
**characterized by** that each of the one, or more, independent buffer carriers (22) are arranged independently to control velocity and position.

2. The sorting system according to claim 1, wherein two, or more, independent buffer carriers (22) are arranged to be positioned simultaneously to receive items (40) from the in-feed station (10).

3. The sorting system according to claim 1 or 2, wherein each independent buffer carrier (22) on the intermediate track (21) is further arranged to
∘ accelerate to substantially match the velocity of an empty sorter carrier (32) on the main sorter (30),
∘ to move with substantially the same velocity next to the empty sorter carrier, and
∘ to transfer items (40) to the empty sorter carrier during said movement.

4. The sorting system according to any of the preceding claims, wherein each of the one, or more, independent buffer carriers (22) are arranged to be standing still, when items (40) are received from the in-feed station.

5. The sorting system according to any of the preceding claims, wherein the intermediate track (21) comprises:
a. a waiting area (23), wherein the independent buffer carriers (22) waits until they can move into position to receive items from the in-feed station (10),
b. a transfer area (24), wherein the independent buffer carriers receive items from the in-feed station,
c. an accelerating area (25), wherein the velocity of independent buffer carriers is adjusted to the velocity of the sorter carriers (32), and
d. a hand-over area (26), wherein the independent buffer carriers (22) hands over the items to the sorter carriers (32).

6. The sorting system according to any of the preceding claims, wherein the in-feed station (10) comprises one, or more, feed lines (28).

7. The sorting system according to claim 6, wherein the in-feed station (10) comprises a shifting device (27); the shifting device is placed between the feed lines (28) and the transfer buffer (20), and the shifting device is intermediately holding items (40).

8. The sorting system according to claim 7, wherein the one, or more, feed lines (28) are arranged to deliver items to the shifting device (27).

9. The sorting system according to any of the claims 7-8, wherein the shifting device (27) comprises two, or more, holding carriers (29).

10. The sorting system according to any of the claims 7-9, wherein the shifting device (27) is arranged to move empty holding carriers (29) into a position to receive items from the feed lines (28).

11. The sorting system according to any of the claims 1-5, wherein the in-feed station (10) comprises an in-feed sorter (51); the in-feed sorter is arranged to receive items (40) and transfer the items to the transfer buffer (20).

12. The sorting system according to any of the preceding claims, wherein the sorting system comprises a control system (50), and the control system is arranged to communicate with the independent buffer carriers (22).

13. The sorting system according to any of the preceding claims, wherein the buffer carriers (22), sorter carriers (32) and/or holding carriers (29) comprises an transport element (48, 49) to receive or deliver items, preferably the transport element may be a transverse conveyor (49).

14. The sorting system according to any of the preceding claims, wherein the sorting system (1) comprises a discharge zone (42), the discharge zone is arranged to receive items (40) too large for the buffer carriers (22) or items which are misaligned on the buffer carriers or falls of the buffer carriers.

15. A method for sorting items in a sorting system, the sorting system is comprising an in-feed station (10), a transfer buffer (20), and a main sorter (30), the transfer buffer (20) is comprising an intermediate track (21) and one, or more, independent buffer carriers (22), the independent buffer carriers being displaceable around the intermediate track, the intermediate track forming a closed loop,
wherein the method is comprising:
- the in-feed station (10) receiving items (40),
- the in-feed station transferring the items (40) from the in-feed station to the transfer buffer (20),
- positioning one, or more, independent buffer carriers (22) to receiving items (40) from the in-feed station (10),
- the main sorter (30) receiving items from the transfer buffer (20), and
- each independent buffer carrier (22) on the intermediate track (21) is
∘ moving into a position to receive items from the in-feed station (10),
∘ receiving items from the in-feed station,
∘ moving into a position to deliver the items (40) to the main sorter (30), and
∘ handing over the items to the main sorter,
**characterized by** that each of the one, or more, independent buffer carriers (22) are arranged independently to control velocity and position.

16. The method according to claim 15, wherein each independent buffer carrier (22) on the intermediate track (21) further is
∘ accelerating to substantially match the velocity of an empty sorter carrier (32) on the main sorter (30),
∘ moving with substantially the same velocity next to the empty sorter carrier, and
∘ transferring items (40) to the empty sorter carrier during said movement.

17. The method according to any of the claims 15-16, whereby the method is performed by a sorting system according to any of the claims 1-14.

## Patentansprüche

1. Sortiersystem zum Sortieren von Gegenständen, wobei das Sortiersystem (1) eine Einführstation (10), einen Transferpuffer (20) und einen Hauptsortierer (30) umfasst, wobei
- die Einführstation (10) zum Empfangen von Gegenständen (40) und zum Transferieren der Gegenstände (40) von der Einführstation in den Transferpuffer (20) angeordnet ist,
- der Transferpuffer (20) eine Zwischenspur (21) und einen oder mehrere unabhängige Pufferträger (22) umfasst, wobei die unabhängigen Pufferträger um die Zwischenspur versetzbar sind, wobei die Zwischenspur eine geschlossene Schleife bildet,
- der Hauptsortierer (30) zum Empfangen von Gegenständen aus dem Transferpuffer (20) angeordnet ist,
- jeder unabhängige Pufferträger (22) auf der Zwischenspur (21) dazu angeordnet ist,
∘ sich in eine Position zu bewegen, in der Gegenstände von der Einführstation (10) empfangen werden,
∘ Gegenstände von der Einführstation zu empfangen,
∘ sich in eine Position zu bewegen, um die Gegenstände dem Hauptsortierer (30) zuzuführen, und
∘ die Gegenstände an den Hauptsortierer zu übergeben, **dadurch gekennzeichnet, dass** jeder des einen oder der mehreren unabhängigen Pufferträger (22) unabhängig angeordnet ist, um Geschwindigkeit und Position zu steuern.

2. Sortiersystem nach Anspruch 1, wobei zwei oder mehr unabhängige Pufferträger (22) zur gleichzeitigen Positionierung angeordnet sind, um Gegenstände (40) von der Einführstation (10) zu empfangen.

3. Sortiersystem nach Anspruch 1 oder 2, wobei jeder unabhängige Pufferträger (22) auf der Zwischenspur (21) ferner dazu angeordnet ist,
∘ seine Geschwindigkeit zu erhöhen, um sich im Wesentlichen an die Geschwindigkeit eines leeren Sortiererträgers (32) auf dem Hauptsortierer (30) anzugleichen,
∘ sich mit im Wesentlichen derselben Geschwindigkeit neben dem leeren Sortiererträger zu bewegen, und
∘ Gegenstände (40) während dieser Bewegung auf den leeren Sortiererträger zu transferieren.

4. Sortiersystem nach einem der vorhergehenden Ansprüche, wobei jeder des einen oder der mehreren unabhängigen Pufferträger (22) so angeordnet ist, dass er stillsteht, wenn Gegenstände (40) von der Einführstation empfangen werden.

5. Sortiersystem nach einem der vorhergehenden Ansprüche, wobei die Zwischenspur (21) Folgendes umfasst:
a. einen Wartebereich (23), in dem die unabhängigen Pufferträger (22) warten, bis sie sich in die Position zum Empfang von Gegenständen von der Einführstation (10) bewegen können,
b. einen Transferbereich (24), in dem die unabhängigen Pufferträger Gegenstände von der Einführstation empfangen,
c. einen Beschleunigungsbereich (25), in dem die Geschwindigkeit unabhängiger Pufferträger auf die Geschwindigkeit der Sortiererträger (32) eingestellt wird, und
d. einen Übergabebereich (26), in dem die unabhängigen Pufferträger (22) die Gegenstände an die Sortiererträger (32) übergeben.

6. Sortiersystem nach einem der vorhergehenden Ansprüche, wobei die Einführstation (10) eine oder mehrere Zuführlinien (28) umfasst.

7. Sortiersystem nach Anspruch 6, wobei die Einführstation (10) eine Verschiebevorrichtung (27) umfasst, wobei die Verschiebevorrichtung zwischen den Zuführlinien (28) und dem Transferpuffer (20) angeordnet ist und die Verschiebevorrichtung Gegenstände (40) intermediär hält.

8. Sortiersystem nach Anspruch 7, wobei die eine oder die mehreren Zuführlinien (28) zum Zuführen von Gegenständen an die Verschiebevorrichtung (27) angeordnet sind.

9. Sortiersystem nach einem der Ansprüche 7 - 8, wobei die Verschiebevorrichtung (27) zwei oder mehr Halteträger (29) umfasst.

10. Sortiersystem nach einem der Ansprüche 7 - 9, wobei die Verschiebevorrichtung (27) angeordnet ist, um leere Halteträger (29) in eine Position zum Empfang von Gegenständen von den Zuführlinien (28) zu bewegen.

11. Sortiersystem nach einem der Ansprüche 1 - 5, wobei die Einführstation (10) einen Einführsortierer (51) umfasst und der Einführsortierer zum Empfang von Gegenständen (40) und zum Transfer der Gegenstände an den Transferpuffer (20) angeordnet ist.

12. Sortiersystem nach einem der vorhergehenden Ansprüche, wobei das Sortiersystem ein Steuersystem (50) umfasst und das Steuersystem zum Kommunizieren mit den unabhängigen Pufferträgern (22) angeordnet ist.

13. Sortiersystem nach einem der vorhergehenden Ansprüche, wobei die Pufferträger (22), die Sortiererträger (32) und/oder die Halteträger (29) ein Transportelement (48, 49) zum Empfangen oder Zuführen von Gegenständen umfassen, wobei das Transportelement vorzugsweise ein Querförderer (49) sein kann.

14. Sortiersystem nach einem der vorhergehenden Ansprüche, wobei das Sortiersystem (1) eine Austragzone (42) umfasst, wobei die Austragzone zum Empfangen von Gegenständen (40), die zu groß für die Pufferträger (22) sind, oder Gegenständen, die auf den Pufferträgern falsch ausgerichtet oder von den Pufferträgern herabgefallen sind, angeordnet ist.

15. Verfahren zum Sortieren von Gegenständen in einem Sortiersystem, wobei das Sortiersystem eine Einführstation (10), einen Transferpuffer (20) und einen Hauptsortierer (30) umfasst, wobei der Transferpuffer (20) eine Zwischenspur (21) und einen oder mehrere unabhängige Pufferträger (22) umfasst, wobei die unabhängigen Pufferträger um die Zwischenspur versetzbar sind, wobei die Zwischenspur eine geschlossene Schleife bildet,
wobei das Verfahren Folgendes umfasst:
- die Einführstation (10) empfängt Gegenstände (40),
- die Einführstation transferiert die Gegenstände (40) von der Einführstation an den Transferpuffer (20),
- Positionieren eines oder mehrerer unabhängiger Pufferträger (22), um Gegenstände (40) von der Einführstation (10) zu empfangen,
- der Hauptsortierer (30) empfängt Gegenstände von dem Transferpuffer (20) und
- jeder unabhängige Pufferträger (22) auf der Zwischenspur (21)
∘bewegt sich in eine Position, in der Gegenstände von der Einführstation (10) empfangen werden,
∘ empfängt Gegenstände von der Einführstation,
∘ bewegt sich in eine Position, um die Gegenstände (40) dem Hauptsortierer (30) zuzuführen, und
∘ übergibt die Gegenstände an den Hauptsortierer,
**dadurch gekennzeichnet, dass** jeder des einen oder der mehreren unabhängigen Pufferträger (22) unabhängig angeordnet ist, um Geschwindigkeit und Position zu steuern.

16. Verfahren nach Anspruch 15, wobei jeder unabhängige Pufferträger (22) auf der Zwischenspur (21) ferner
∘ seine Geschwindigkeit erhöht, um sich im Wesentlichen an die Geschwindigkeit eines leeren Sortiererträgers (32) auf dem Hauptsortierer (30) anzugleichen,
∘ sich mit im Wesentlichen derselben Geschwindigkeit neben dem leeren Sortiererträger bewegt und
∘ Gegenstände (40) während dieser Bewegung auf den leeren Sortiererträger transferiert.

17. Verfahren nach einem der Ansprüche 15 - 16, wobei das Verfahren durch ein Sortiersystem nach einem der Ansprüche 1 - 14 durchgeführt wird.

## Revendications

1. Système de tri permettant de trier des articles, le système de tri (1) comprenant une station d'alimentation (10), un tampon de transfert (20) et un trieur principal (30),
- la station d'alimentation (10) étant conçue pour recevoir des articles (40) et pour transférer les articles (40) de la station d'alimentation vers le tampon de transfert (20),
- le tampon de transfert (20) comprenant une piste intermédiaire (21) et un ou plusieurs supports de tampon indépendants (22), les supports de tampon indépendants pouvant être déplacés autour de la piste intermédiaire, la piste intermédiaire formant une boucle fermée,
- le trieur principal (30) étant conçu pour recevoir des articles provenant du tampon de transfert (20),
- chaque support de tampon indépendant (22) sur la piste intermédiaire (21) étant conçu pour
∘ se déplacer dans une position permettant de recevoir des articles provenant de la station d'alimentation (10),
∘ recevoir des articles provenant de la station d'alimentation,
∘ se déplacer dans une position permettant d'acheminer les articles jusqu'au trieur principal (30), et
∘ remettre les articles au trieur principal, **caractérisé en ce que** chacun du ou des supports de tampon indépendants (22) est conçu indépendamment pour commander la vitesse et la position.

2. Système de tri selon la revendication 1, au moins deux supports de tampon indépendants (22) étant conçus pour être positionnés simultanément pour recevoir des articles (40) provenant de la station d'alimentation (10) .

3. Système de tri selon la revendication 1 ou 2, chaque support de tampon indépendant (22) sur la piste intermédiaire (21) étant en outre conçu pour
∘ accélérer pour correspondre sensiblement à la vitesse d'un support de trieur vide (32) sur le trieur principal (30),
∘ se déplacer à sensiblement la même vitesse à côté du support de trieur vide, et
∘ transférer des articles (40) sur le support de trieur vide pendant ledit déplacement.

4. Système de tri selon l'une quelconque des revendications précédentes, chacun du ou des supports de tampon indépendants (22) étant conçu pour être immobile, lorsque des articles (40) sont reçus de la station d'alimentation.

5. Système de tri selon l'une quelconque des revendications précédentes, la piste intermédiaire (21) comprenant :
a. une zone d'attente (23), les supports de tampon indépendants (22) attendant jusqu'à ce qu'ils puissent se mettre en position pour recevoir des articles provenant de la station d'alimentation (10),
b. une zone de transfert (24), les supports de tampon indépendants recevant des articles de la station d'alimentation,
c. une zone d'accélération (25), la vitesse des supports de tampon indépendants étant ajustée à la vitesse des supports de trieur (32), et
d. une zone de remise (26), les supports de tampon indépendants (22) remettant les articles aux supports de trieur (32).

6. Système de tri selon l'une quelconque des revendications précédentes, la station d'alimentation (10) comprenant une ou plusieurs lignes d'alimentation (28).

7. Système de tri selon la revendication 6, la station d'alimentation (10) comprenant un dispositif de déplacement (27) ; le dispositif de déplacement étant placé entre les lignes d'alimentation (28) et le tampon de transfert (20), et le dispositif de déplacement tenant de manière intermédiaire des articles (40).

8. Système de tri selon la revendication 7, la ou les lignes d'alimentation (28) étant conçues pour acheminer des articles jusqu'au dispositif de déplacement (27).

9. Système de tri selon l'une quelconque des revendications 7 à 8, le dispositif de déplacement (27) comprenant au moins deux supports de tenue (29).

10. Système de tri selon l'une quelconque des revendications 7 à 9, le dispositif de déplacement (27) étant conçu pour déplacer des supports de tenue vides (29) dans une position leur permettant de recevoir des articles provenant des lignes d'alimentation (28).

11. Système de tri selon l'une quelconque des revendications 1 à 5, la station d'alimentation (10) comprenant un trieur d'alimentation (51) ; le trieur d'alimentation étant conçu pour recevoir des articles (40) et transférer les articles au tampon de transfert (20).

12. Système de tri selon l'une quelconque des revendications précédentes, le système de tri comprenant un système de commande (50), et le système de commande étant conçu pour communiquer avec les supports de tampon indépendants (22).

13. Système de tri selon l'une quelconque des revendications précédentes, les supports de tampon (22), les supports de trieur (32) et/ou les supports de réception (29) comprenant un élément de transport (48, 49) pour recevoir ou acheminer des articles, l'élément de transport pouvant de préférence être un transporteur transversal (49).

14. Système de tri selon l'une quelconque des revendications précédentes, le système de tri (1) comprenant une zone de décharge (42), la zone de décharge étant conçue pour recevoir des articles (40) trop grands pour les supports de tampon (22) ou des articles qui sont mal alignés sur les supports de tampon ou des chutes des supports de tampon.

15. Procédé de tri d'articles dans un système de tri, le système de tri comprenant une station d'alimentation (10), un tampon de transfert (20) et un trieur principal (30), le tampon de transfert (20) comprenant une piste intermédiaire (21) et un ou plusieurs supports de tampon indépendants (22), les supports de tampon indépendants pouvant être déplacés autour de la piste intermédiaire, la piste intermédiaire formant une boucle fermée,
le procédé comprenant les étapes consistant à :
- pour la station d'alimentation (10), recevoir des articles (40),
- pour la station d'alimentation, transférer les articles (40) de la station d'alimentation au tampon de transfert (20),
- positionner un ou plusieurs supports de tampon indépendants (22) pour recevoir des articles (40) provenant de la station d'alimentation (10),
- pour le trieur principal (30), recevoir des articles du tampon de transfert (20), et
- chaque support de tampon indépendant (22) sur la piste intermédiaire (21)
∘ se déplaçant dans une position permettant de recevoir des articles de la station d'alimentation (10),
∘ recevant des articles provenant de la station d'alimentation,
∘ se déplaçant dans une position pour acheminer les articles (40) jusqu'au trieur principal (30), et
∘ remettant les articles au trieur principal,
**caractérisé en ce que** chacun du ou des supports de tampon indépendants (22) est conçu indépendamment pour commander la vitesse et la position.

16. Procédé selon la revendication 15, chaque support de tampon indépendant (22) sur la piste intermédiaire (21) en outre
∘ accélérant pour correspondre sensiblement à la vitesse d'un support de trieur vide (32) sur le trieur principal (30),
∘ se déplaçant à sensiblement la même vitesse à côté du support de trieur vide, et
∘ transférant des articles (40) sur le support de trieur vide pendant ledit déplacement.

17. Procédé selon l'une quelconque des revendications 15 à 16, le procédé étant mis en œuvre par un système de tri selon l'une quelconque des revendications 1 à 14.
